# EUROPÄISCHE PATENTSCHRIFT

(11) **EP 4 374 705 B1**
(45) Veröffentlichungstag und Bekanntmachung des Hinweises auf die Patenterteilung: **15.01.2025**
(21) Anmeldenummer: 22209985.5
(22) Anmeldetag: 28.11.2022
(51) Int. Cl.: A23G 1/18, A23G 3/02, B01F 27/112

(54) **TEMPERIERMASCHINE ZUM TEMPERIEREN VON SÜSSWARENMASSEN MIT EINZELN EINGEHÄNGTEN RÜHRARMEN**
TEMPERING MACHINE FOR TEMPERING CONFECTIONERY MASSES WITH INDIVIDUALLY SUSPENDED STIRRING ARMS
MACHINE DE THERMORÉGULATION POUR TEMPÉRER DES MASSES DE CONFISERIE DOTÉES DE BRAS D'AGITATION SUSPENDUS INDIVIDUELLEMENT

(43) Veröffentlichungstag der Anmeldung: 29.05.2024
(73) Patentinhaber: Sollich KG, 32105 Bad Salzuflen (DE)
(72) Erfinder: Bäumer, Volker, 32105 Bad Salzuflen (DE); Koppei, Dirk, 32105 Bad Salzuflen (DE); Dieringer, Sebastian, 32105 Bad Salzuflen (DE); Stolpe, Kersten, 32105 Bad Salzuflen (DE)
(74) Vertreter: REHBERG HÜPPE + PARTNER

(56) Entgegenhaltungen:
- EP-A1- 1 363 098
- EP-A1- 4 014 746
- WO-A1-2010/125006
- WO-A1-2013/151733
- WO-A1-2016/038098
- US-A- 1 375 210

## Beschreibung

### TECHNISCHES GEBIET DER ERFINDUNG

Die Erfindung bezieht sich auf eine Temperiermaschine zum Temperieren von Süßwarenmassen. Die Temperiermaschine kann dazu dienen, die jeweilige Süßwarenmasse am Ausgang der Temperiermaschine auf eine bestimmte Temperatur einzustellen. Das Temperieren der jeweiligen Süßwarenmasse kann aber auch bedeuten, dass ein bestimmtes Temperatur-ZeitProfil abgefahren wird, um der Süßwarenmasse am Ausgang der Temperiermaschine bestimmte Eigenschaften zu verleihen, die über ihre Temperatur hinausgehen. Insbesondere kann es sich bei der Süßwarenmasse um kakaobutterhaltige Massen, wie beispielsweise Schokolade, handeln, bei denen mit bestimmten Temperatur-Zeit-Profilen die Bildung gewünschter Form V Fettkristalle gefördert und die Bildung unerwünschter Form IV Fettkristalle unterdrückt wird.

Genauer bezieht sich die vorliegende Erfindung auf eine Temperiermaschine zum Temperieren von Süßwarenmassen mit den Merkmalen des Oberbegriffs des unabhängigen Patentanspruchs 1.

### STAND DER TECHNIK

Eine Temperiermaschine zum Temperieren von Süßwarenmassen mit den Merkmalen des Oberbegriffs des unabhängigen Patentanspruchs 1 ist aus der EP 4 014 746 A1 bekannt. Die Temperiermaschine weist eine erste Temperiermediumkammer für den Durchfluss eines Temperiermediums und eine in einer axialen Richtung der Temperiermaschine benachbarte zweite Temperiermediumkammer für den Durchfluss eines Temperiermediums auf. Eine Süßwarenmassekammer für den Durchfluss der Süßwarenmasse ist in der axialen Richtung zwischen der ersten Temperiermediumkammer und der zweiten Temperiermediumkammer angeordnet. Ein Mischwerkzeug zum Mischen der Süßwarenmasse ist in der Süßwarenmassekammer drehend antreibbar. Eine Trennscheibe ist so in der Süßwarenmassekammer angeordnet, dass eine erste Teilkammer und eine Teilkammer gebildet wird. Die Trennscheibe weist in einem radial außenliegenden Bereich randgeschlossene Durchtrittsöffnungen auf, die für ein Durchfluss der Süßwarenmasse von der ersten Teilkammer in der axialen Richtung in die zweite Teilkammer ausgebildet sind. Ein erstes Mischwerkzeug ist in der ersten Teilkammer und ein zweites Mischwerkzeug ist in der zweiten Teilkammer angeordnet. Die Mischwerkzeuge sind mittels einer Lagereinrichtung derart an der Trennscheibe gelagert, dass eine rotatorische Bewegung relativ zu der Trennscheibe ermöglicht und eine translatorische Bewegung relativ zu der Trennscheibe auf die Trennscheibe zu verhindert oder eingeschränkt ist. Eine Welle, die sich in der axialen Richtung der Temperiermaschine erstreckt und diese axiale Richtung definiert, treibt die Mischwerkzeuge drehend an. Die Mischwerkzeuge weisen jeweils eine Mehrzahl beabstandet angeordneter Mischarme mit jeweils einer Mehrzahl von Mischelementen auf. Die Mischarme jedes Mischwerkzeugs sind an einem Zentralkörper angeordnet und bilden zusammen mit diesem Zentralkörper das einstückige Mischwerkzeug. Die Lagereinrichtung für das jeweilige Mischwerkzeug weist einen Lagerring auf, der einen Kontakt zwischen dem Mischwerkzeug und der Trennscheibe verhindert oder einschränkt. Verschiedene Ausführungsformen der Mischwerkzeuge unterscheiden sich durch unterschiedliche Anzahlen und Anordnungen der Mischarme und der daran angeordneten Mischelemente. Um zwischen den verschiedenen Ausführungsformen der Mischwerkzeuge zu wechseln, müssen die Mischwerkzeuge komplett ausgetauscht werden. Eine gute Funktion und eine lange Lebensdauer der Mischwerkzeuge setzen voraus, dass sich diese in einem kleinen Abstand zu den Temperiermediumkammern und der Trennscheibe in den Teilkammern der Süßwarenmassekammer bewegen. Um diese kleinen Abstände im Bereich weniger zehntel Millimeter einzuhalten, müssen die Mischwerkzeuge mit den Mischarmen einerseits sehr genau gefertigt und andererseits von ihrer jeweiligen Lagereinrichtung sehr genau geführt werden.

Eine aus der EP 1 004 244 A1 bekannte Vorrichtung zum kontinuierlichen Aufbereiten von zu verarbeitenden kakaobutterhaltigen Massen, insbesondere Schokoladenmassen, besitzt eine Temperiersäule, die mehrere, einen Zylinder bildende, übereinander angeordnete und an einen Kreislauf für ein Temperiermedium angeschlossene Kammern aufweist. Zwischen zwei benachbarten Kammern ist ein im Wesentlichen von Temperierflächen der beiden Kammern begrenzter und von der Masse durchströmter Temperierraum gebildet. In dem Temperierraum ist eine angetriebene Scheibe angeordnet, die auf ihrem äußeren oder inneren Umfang Aussparungen für den Übertritt der Masse von der Unterseite der Scheibe auf deren Oberseite und auf ihren beiden Oberflächen Abstreiferstege aufweist, die berührungslos an den Temperierflächen der Kammern entlangstreichen und dabei Masse von den Temperierflächen abstreifen. Als Abstreiferstege sind eine Vielzahl von Mischschaufeln vorgesehen, die eine kleinere Erstreckung als den Radius der Scheibe aufweisen und die an der Oberseite und der Unterseite der Scheibe über den Umfang der Scheibe ohne gegenseitige Kanalbildung verteilt angeordnet sind. Bei dieser bekannten Vorrichtung dient die in dem Temperierraum umlaufende Scheibe sowohl als den Temperierraum in zwei Teilräume aufteilende Trennscheibe als auch mit ihren als Mischschaufeln ausgebildeten Abstreiferstegen als Mischwerkzeug. Damit die Abstreiferstege dieses Mischwerkzeugs in kleinem definiertem Abstand berührungslos an den Temperierflächen der angrenzenden Kammern entlangstreifen, muss die gesamte Temperierscheibe sehr genau gefertigt und gelagert sein. Bei der genauen Lagerung ist zu berücksichtigen, dass jede Scheibe an einer vertikal ausgerichteten Welle abzustützen ist, die als Antriebswelle für alle in allen Temperierräumen drehangetriebenen Scheiben dient. Jede Scheibe kann dabei, je nach ihrem Durchmesser, eine Masse in der Größenordnung von einigen 10 kg haben, sodass die Lagerung der Welle eine Gesamtmasse von typischerweise mehren 100 kg abzustützen hat. Dies erfordert einen erheblichen konstruktiven Aufwand. Eine Änderung der Mischwerkzeuge ist nur durch Komplettaustausch der Scheiben möglich.

Aus der WO 97/ 25 579 A ist ein Wärmetauscher zur Wärmebehandlung eines Produkts mittels eines Heiz- oder Kühlmediums bekannt. Der Wärmetauscher weist eine erste Anzahl von Produkträumen auf, die durch ringförmige Abstandselemente begrenzt sind. Die Produkträume weisen Ein- und Auslässe für das wärmezubehandelnde Produkt auf. In den Produkträumen sind Scheiben mit Abstreifern vorgesehen, die auf einer vertikal ausgerichteten Welle angeordnet sind. In dem Wärmetauscher gibt es auch eine zweite Anzahl von Räumen für das Heiz- oder Kühlmedium. Diese Räume haben Ein- und Auslässe für das Heiz-/Kühlmedium und sind gegenüber den Ein- und Auslässen für das Produkt abgedichtet. Die vertikale Welle erstreckt sich durch den Wärmetauscher und ist verdrehbar. Die Scheiben sind mit Naben mit einer Ausdehnung normal zur Scheibenebene ausgestattet, um gegenüber benachbarten Scheiben und der Welle abzudichten. Die Scheiben sind abnehmbar auf der Welle angeordnet. Die Scheiben sind mit Öffnungen versehen, um die Passage des Produkts durch den Wärmetauscher zu erleichtern. Die Öffnungen sind an einem Außenumfang der Scheiben angeordnet. Die Abstreifer sind in radialen Schlitzen in den Scheiben angeordnet und dazu ausgebildet, wechselweise die eine oder die andere von zwei einander gegenüberliegenden Wärmeaustauschflächen, die einen Produktraum begrenzen, abzustreifen. Die als "Scraper" bezeichneten Abstreifer sind zur direkten Anlage an den Wärmeaustauschflächen vorgesehen. Die Abstreifer, die Scheibe und deren Nabe müssen starr miteinander verbunden sein, um die Funktion dieses bekannten Wärmetauschers zu gewährleisten.

### AUFGABE DER ERFINDUNG

Der Erfindung liegt die Aufgabe zugrunde, eine Temperiermaschine mit den Merkmalen des Oberbegriffs des unabhängigen Patentanspruchs 1 aufzuzeigen, die bezüglich ihrer in den Massekammern umlaufenden Rührarme besonders einfach an unterschiedliche Süßwarenmassen mit unterschiedlichen Viskositäten anpassbar ist.

Beispielsweise erfordern Süßwarenmassen mit unterschiedlichen Viskositäten, die sich bei Schokolade beispielsweise durch unterschiedliche Fettanteile ergeben, andere oder weniger Rührarme, um diese mit einem vorhandenen Antrieb in mit Süßwarenmasse gefüllten Massekammern umlaufen lassen zu können.

### LÖSUNG

Die Aufgabe der Erfindung wird durch eine Temperiermaschine zum Temperieren von Süßwarenmassen mit den Merkmalen des unabhängigen Patentanspruchs 1 gelöst. Bevorzugte Ausführungsform der erfindungsgemäßen Temperiermaschine sind in den abhängigen Patentansprüchen definiert.

### BESCHREIBUNG DER ERFINDUNG

Eine erfindungsgemäße Temperiermaschine zum Temperieren von Süßwarenmassen weist einen Masseraum auf, der in Richtung einer Hauptachse durch Trennscheiben in Massekammern unterteilt ist. Typischerweise hat der Masseraum eine zylindrische Grundform und er wird nach außen durch zwischen den Trennscheiben angeordnete Ringen begrenzt, die einstückig mit den Trennscheiben ausgebildet sein können. Die sich quer zu der Hauptachse und um die Hauptachse herum erstreckenden Trennscheiben weisen Massedurchtrittsöffnungen auf. Zumindest teilweise sind die Trennscheiben als Temperierscheiben ausgebildet. Allermindestens ist eine und in der Regel sind mindestens zwei der Trennscheiben Temperierscheiben. Maximal sind alle Trennscheiben Temperierscheiben. Mit einer Temperierscheibe kann der Süßwarenmasse Wärmeenergie aktiv von extern zugeführt werden oder von der Süßwarenmasse kann Wärmeenergie aktiv nach extern abgeführt werden. Dabei ist unter einem aktiven Zuführen von Wärmeenergie von außen zu verstehen, dass entweder ein Wärmeträgermedium, das eine höhere Temperatur als die Süßwarenmasse aufweist, zugeführt wird oder eine von außen zugeführte andere Energieform in der Temperierscheibe in Wärmeenergie umgewandelt wird. Beispielsweise kann die Temperierscheibe mit elektrischem Strom beheizt werden. Zum aktiven Abführen von Wärmeenergie von der Süßwarenmasse nach extern kann ebenfalls ein Wärmeträgermedium verwendet werden, das dann eine niedrigere Temperatur als die Süßwarenmasse aufweist. Eine elektrische Kühlung durch Peltierelemente ist ebenfalls nicht ausgeschlossen. Allerdings hat sich bei einer Temperiermaschine, wie sie Gegenstand der vorliegenden Erfindung ist, die Verwendung von Temperierflüssigkeit, insbesondere Wasser, die mit definierter Temperatur in einem großen Volumenstrom durch die Temperierscheiben hindurchgeführt wird, besonders bewährt.

Eine Antriebswelle der Temperiermaschine erstreckt sich längs der Hauptachse durch die Trennscheiben und die Massekammern hindurch. In den Massekammern sind Antriebsnaben drehfest auf der Antriebswelle angeordnet; und an den Antriebsnaben sind Rührarme drehfest gelagert, die sich in den Massekammern radial zu der Hauptachse erstrecken. Zum Verdrehen der Antriebswelle mit den Antriebsnaben und den Rührarmen ist die Antriebswelle an einen Drehantrieb, beispielsweise einen elektrischen Antriebsmotor anzuschließen.

Zumindest einige der Rührarme der erfindungsgemäßen Temperiermaschine sind einzeln in Richtung der Hauptachse beweglich in ihre jeweilige Antriebsnabe eingehängt. Andere Rührarme können einstückig mit ihrer Antriebsnabe ausgebildet oder starr an ihrer Antriebsnabe befestigt sein. Vorzugsweise sind aber alle Rührarme einzeln in Richtung der Hauptachse beweglich in ihre jeweilige Antriebsnabe eingehängt.

Bei der erfindungsgemäßen Temperiermaschine bilden die Antriebsnaben und die in sie eingehängten Rührarme keine fest oder gar starr zusammenhängende Einheit. Die Antriebsnaben sind nicht einstückig mit den eingehängten Rührarmen gefertigt. Aber auch in der zusammengebauten Temperiermaschine bilden die Antriebsnaben und die darin eingehängten Rührarme keine starre oder gar monolithische Einheit. Vielmehr sind die eingehängten Rührarme gegenüber ihrer Antriebsnabe in Richtung der Hauptachse beweglich und deshalb auch wieder aus ihrer Antriebsnabe aushängbar. Ein solches Aushängen kann zum Entfernen oder Austauschen von Rührarmen genutzt werden. Zudem erlaubt die Beweglichkeit der einzelnen eingehängten Rührarme in Richtung der Hauptachse den Rührarmen, ihre Position längs der Hauptachse gegenüber ihrer Antriebsnabe an die Lage der Massekammer in Richtung der Hauptachse anzupassen, und zwar nicht nur einmalig, sondern während jedes Umlauf jedes eingehängten Rührarms um die Hauptachse durch die Massekammer. So können sich die eingehängten Rührarme auch an Verformungen der Massekammer beziehungsweise der sie begrenzenden Trennscheiben anpassen.

Konkret können die Antriebsnaben in Richtung der Hauptachse verlaufenden hinterschnittene Führungsnuten aufweisen, in denen komplementär geformte Einhängebereiche der eingehängten Rührarme mit Spiel geführt sind. Die Führungsnuten können über die gesamte axiale Länge der jeweiligen Antriebsnabe durchlaufen und beidseitig offen sein. In der zusammengebauten Temperiermaschine sind die eingehängten Rührarme mit ihren Einhängebereichen dennoch in den Führungsnuten gefangen, weil an die jeweilige Massekammer angrenzenden Trennscheiben ein Herausziehen der Einhängebereiche aus den Führungsnuten und auch jegliche größerer Bewegung der Einhängebereiche in den Führungsnuten unterbinden. Alternativ können die Führungsnuten in den Rührarmen ausgebildet sein. Dann können die Antriebsnaben in Richtung der Hauptachse verlaufende hinterschnittene Führungsschienen aufweisen, auf denen die komplementär geformten Einhängebereiche der eingehängten Rührarme mit Spiel geführt sind. Die in die jeweiligen Führungsnuten eingreifenden Teile der Rührarme oder Antriebsnaben können auch Kopfbolzen sein, die in die Hauptkörper der jeweiligen Rührarme oder Antriebsnaben eingeschraubt sind.

Komplementäre Ausformungen der Antriebsnaben und der Einhängebereiche der eingehängten Rührarme können auch noch anders gestaltet sein. Beispielsweise können die Rührarme mit hakenförmigen Einhängebereichen in ihre Antriebsnabe eingehakt oder mit ösenförmigen Einhängebereichen auf ihre Antriebsnabe aufgehakt sein. Dabei ist immer darauf zu achten, dass ausreichend große Abstützflächen für die Einhängebereiche an den Antriebsnaben ausgebildet sind, um Drehmomente, die zwischen den Rührarmen und den Antriebsnaben um die Hauptachse wirken, zuverlässig abzustützen.

Das Spiel, mit dem die Einhängebereiche der eingehängten Rührarme an den Antriebsnaben geführt sind, ist so groß zu wählen, dass die Beweglichkeit der Rührarme in Richtung der Hauptachse sichergestellt ist. Konkret kann dieses Spiel quer zu der Hauptachse allseitig im Bereich von 0,05 mm bis 0,3 mm liegen, wobei ein Bereich von 0,1 mm bis 0,2 mm bevorzugt ist. Entsprechend kann sich der Einhängebereich in einer Ebene, zu der die Hauptachse normal verläuft, in allen Richtungen um +/- 0,05 mm bis 0,3 mm und vorzugsweise um +/- 0,1 mm bis 0,2 mm bewegen. Diese Beweglichkeit hat auch zur Folge, dass der jeweilige eingehängte Rührarm leicht aus dieser Ebene verkippt werden kann. Das angegebene Spiel von etwa +/-0,15 mm ergibt bei einer Führungslänge des Einhängebereichs der eingehängten Rührarme von 15 mm einen Kippwinkel im Bogenmaß von maximal +/- 0,3 mm / 15 mm = +/- 0,02. Dies entspricht einem Kippwinkel zu der Ebene, zu der die Hauptachse normal verläuft, von weniger als +/- 2,5°.

Wenn die Führungsnuten T-förmige Grundformen mit abgerundeten Konturen aufweisen, ergeben sich große Führungs- und Abstützflächen für die Einhängebereiche der Rührarme, und die Führungsnuten sind ebenso wie komplementäre Führungsschienen in hoher Präzision durch Fräsen herstellbar.

Vorzugsweise weisen die eingehängten Rührarme nahe ihrer jeweiligen Antriebsnabe liegende Führungsbereiche und radial nach außen anschließende, von mindestens einer der angrenzenden Trennschreiben weg freigestellte Hauptarbeitsbereiche auf. Über die Führungsbereiche können sich die eingehängten Rührarme an den angrenzenden Trennscheiben ausrichten. Dabei auftretende direkte Kontakte zwischen den Führungsbereichen und den Trennscheiben sind wegen der geringen Relativgeschwindigkeiten der Führungsbereiche gegenüber den Trennscheiben weniger kritisch als direkte Kontakte zwischen den Hauptarbeitsbereichen der Rührarme und den Trennscheiben, die bei der erfindungsgemäßen Temperiermaschine durch das Freistellen dieser Hauptarbeitsbereiche verhindert sind. Die mindestens eine angrenzende Trennscheibe, von der weg der jeweilige Hauptarbeitsbereich freigestellt ist, ist die Trennscheibe, an die sich der Führungsbereich des jeweiligen Rührarms anlegt und an der er sich ausrichtet. Dies ist vielfach nur die angrenzende Trennscheibe, an die die Antriebsnabe einschließlich der Einhängebereiche der eingehängten Rührarme, welche in aller Regel Teil der Führungsbereiche sind, von der durch die Temperiermaschine strömenden Süßwarenmasse angedrückt wird. Wenn dies nicht der Fall ist, aber auch grundsätzlich, können die Hauptarbeitsbereiche der eingehängten Rührarme von beiden angrenzenden Trennscheiben weg freigestellt sein.

Das Maß der Freistellung der Hauptarbeitsbereiche kann im Bereich von 0,05 bis 1 mm liegen, jeweils bezogen auf den angrenzenden Führungsbereich. Die Hauptarbeitsbereiche überstreichen die angrenzenden Trennscheiben demnach in einem Abstand von maximal 1 mm, vorzugsweise in einem Abstand von wenigen bis mehreren zehntel Millimetern.

Die Führungsbereiche der eingehängten Rührarme weisen bei der erfindungsgemäßen Temperiermaschine vorzugsweise Erstreckungen längs der Hauptachse auf, die um 0,1 bis 1 mm und noch mehr bevorzugt um 0,2 bis und 0,6 mm kleiner sind als ein Abstand der an die jeweilige Massekammer angrenzenden Trennscheiben. Die durch die angrenzenden Trennscheiben begrenzte Beweglichkeit der eingehängten Rührarme in Richtung der Hauptachse beträgt also maximal einige und vorzugsweise maximal wenige zehntel Millimeter.

Die eingehängten Rührarme der erfindungsgemäßen Temperiermaschine können unterschiedlich ausgestaltet sein. Auch die Materialien, aus denen diese Rührarme ausgebildet sind, können unterschiedlich sein. Vorzugsweise ist das Material der eingehängten Rührarme so auf das Material der angrenzenden Trennscheiben abgestimmt, dass sich eine günstige Gleitpaarung ergibt.

Bei einer bevorzugten Ausgestaltung weisen zumindest einige der eingehängten Rührarme einen radial zu der Hauptachse verlaufenden Hauptbalken mit in einer oder beiden axialen Richtungen abstehenden und Abstreifkanten umfassenden Förderelementen auf. Wenn nur in einer axialen Richtung Förderelemente von dem Hauptbalken abstehen, weist der Hauptbalken typischerweise selbst Abstreifkanten zum Abstreifen der in der anderen axialen Richtung angrenzenden Trennscheibe auf.

Wenn die in einer axialen Richtung anschließenden Förderelemente gegenüber ihrer Umlaufrichtung um die Hauptachse angestellt und vorzugsweise schaufelförmig ausgebildet sind, fördern sie die Süßwarenmasse in der jeweiligen Massekammer abhängig von den Vorzeichen ihrer Anstellwinkel entweder von der Hauptachse weg oder zu der Hauptachse hin. Auf diese Weise kann eine in einer Hauptrichtung verlaufende Strömung der Süßwarenmasse durch die Massekammer gezielt unterstützt werden. Umgekehrt kann zur stärkeren Durchmischung der Masse der Strömung der Süßwarenmasse durch die Massekammer in der Hauptrichtung mit den Förderelementen gezielt entgegengewirkt werden. In jedem Fall können die Rührarme in die Antriebsnaben in zwei in Richtung der Hauptachse aufeinander folgenden Massekammern mit wechselnder Ausrichtung der Förderelemente eingehängt sein. So fördern die Förderelemente die Süßwarenmasse in der einen Massekammer nach außen und in der nächsten Massekammer nach innen und dabei jeweils in Richtung oder entgegen der Hauptrichtung der Strömung der Süßwarenmasse durch die Massekammer.

Grundsätzlich können die Massedurchtrittsöffnungen in den Trennscheiben der erfindungsgemäßen Temperiermaschine an beliebigen Orten zwischen der Antriebswelle und dem Außenumfang der Trennscheiben vorgesehen sein. In vielen Ausführungsformen der erfindungsgemäßen Temperiermaschine werden jedoch die in Richtung der Hauptachse aufeinander folgenden Trennscheiben wechselweise eine ringförmig um die Antriebswelle verlaufende Massedurchtrittsöffnung und längs ihres Außenumfangs verteilt angeordnete Massedurchtrittsöffnungen aufweisen. So tritt die Süßwarenmasse in jede der durch diese Trennscheiben begrenzten Massekammern radial innen ein und radial außen aus oder radial außen ein und radial innen aus.

Angepasst an ringförmige Massedurchtrittsöffnungen um die Antriebswelle können die Antriebsnaben in Umfangsrichtung um die Antriebswelle herum aufeinanderfolgende Einhängeplätze und dazwischen liegende radial verlaufende und zu benachbarten ringförmigen Massedurchtrittsöffnungen hin offene Massedurchtrittskanäle aufweisen. Die Süßwarenmasse, die durch die jeweilige ringförmige Massedurchtrittsöffnung durchtritt, verteilt sich auf die Massedurchtrittskanäle und tritt aus diesen in die radial an die Antriebsnabe angrenzende Massekammer ein. Die Massedurchtrittskanäle schwächen die Antriebsnaben in ihrer axialen Höhe in Richtung der Hauptachse. Die dazwischen liegenden Einhängeplätze der Antriebsnaben können sich aber über die volle axiale Höhe der Antriebsnaben in Richtung der Hauptachse erstrecken. Entsprechend steht hier eine maximale Führungslänge für die Einhängebereiche der eingehängten Rührarme zur Verfügung.

Wie schon angedeutet wurde, können in den Temperierscheiben der erfindungsgemäßen Temperiermaschine geschlossene Kanäle für Temperierflüssigkeit verlaufen. Diese Kanäle sind insbesondere gegenüber dem Masseraum geschlossen. Die Kanäle der in der Hauptrichtung aufeinander folgenden Temperierscheiben können so in Reihe geschaltet, parallel geschaltet oder an Quellen für unterschiedlich temperierte Temperierflüssigkeit angeschlossen sein, wie dies aus dem Stand der Technik grundsätzlich bekannt ist, um ein gewünschtes Temperatur-ZeitProfil beim Durchlauf der jeweiligen Süßwarenmasse durch die Temperiermaschine einzustellen.

Bei der erfindungsgemäßen Temperiermaschine können die Antriebsnaben unabhängig voneinander jeweils zwei bis acht Einhängeplätze für Rührarme aufweisen. Insbesondere bei einer Antriebsnabe mit mindestens drei Einhängeplätzen kann mindestens einer dieser Einhängeplätze unbesetzt sein; und bei 4, 6 oder 8 Einhängeplätzen kann beispielsweise die Hälfte der Einhängeplätze nicht mit Rührarmen besetzt sein. Auf diese Weise kann die einem Antrieb für die Antriebswelle abverlangte Antriebsleistung reduziert werden, sodass eine gewünschte Drehzahl der Antriebswelle und damit der Rührarme in den Massekammern auch bei begrenzter Antriebsleistung des Antriebsmotors realisierbar ist. Hochviskose Süßwarenmassen, wie beispielsweise Schokoladenmassen mit geringem Fettanteil, können nach einer solchen Reduktion der Anzahl der Rührarme verlangen. Bei der erfindungsgemäßen Temperiermaschine ist diese Reduktion durch einfaches Aushängen von Rührarmen aus den Antriebsnaben realisierbar. Alternativ können bei hochviskosen Süßwarenmassen andere Rührarme mit geringerem Strömungswiderstand oder bei niedrigviskosen Süßwarenmassen andere Rührarme mit größerem Strömungswiderstand eingehängt werden.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein vertikaler Schnitt durch zwei Massekammern und durch diese begrenzende Trennscheiben einer erfindungsgemäßen Temperiermaschine längs einer Hauptachse der Temperiermaschine.
- **Fig. 2**: ist eine axiale Draufsicht von oben auf eine Antriebsnabe mit vier eingehängten Rührarmen, die in der oberen Massekammer gemäß Fig. 1 angeordnet sind.
- **Fig. 3**: ist eine axiale Draufsicht von oben auf die Antriebsnabe gemäß Fig. 2 mit nur zwei eingehängten Rührarmen, die als Alternative zu den vier Rührarmen in der oberen Massekammer gemäß Fig. 1 angeordnet werden können.
- **Fig. 4**: zeigt einen der Rührarme gemäß Fig. 2 und 3 in einer Seitenansicht.
- **Fig. 5**: zeigt einen Rührarm in einer gegenüber Fig. 4 kürzeren Ausführungsform in einer ersten perspektivischen Ansicht schräg von oben.
- **Fig. 6**: zeigt den Rührarm gemäß Fig. 5 in einer perspektivischen Ansicht schräg von unten.
- **Fig. 7**: zeigt einen Rührarm mit einem anders geformten Einhängebereich als in den Figuren 2 bis 6 und dessen Einhängeplatz an der Antriebsnabe in einer axialen Draufsicht.
- **Fig. 8**: zeigt einen Rührarm mit noch einem anders geformten Einhängebereich und dessen Einhängeplatz an der Antriebsnabe in einer axialen Draufsicht; und
- **Fig. 9**: zeigt den Rührarm und dessen Einhängeplatz an der Antriebsnabe gemäß Fig. 8 in einem Schnitt längs einer in Fig. 8 eingezeichneten Schnittlinie A-A.

### FIGURENBESCHREIBUNG

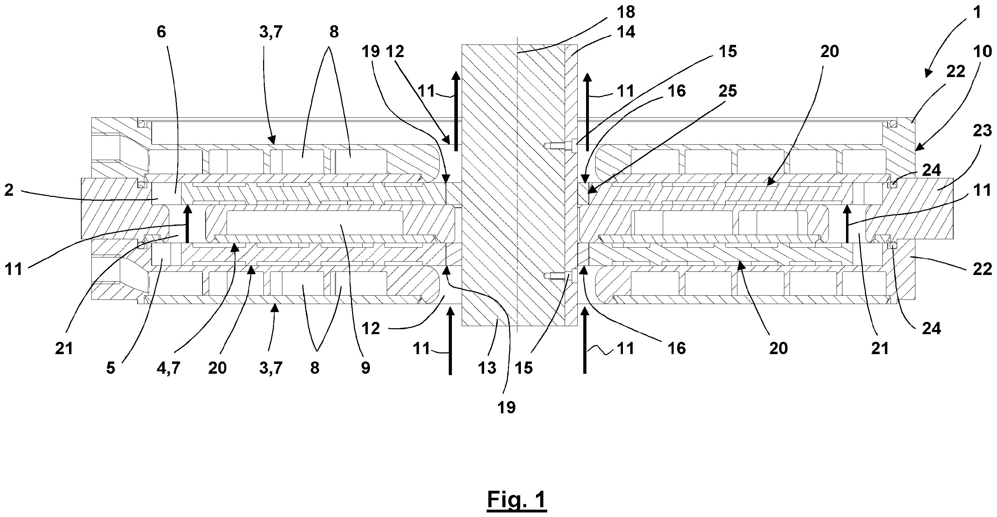

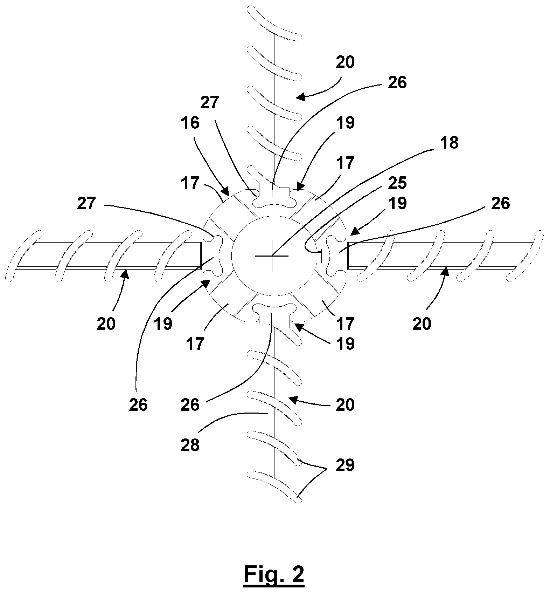

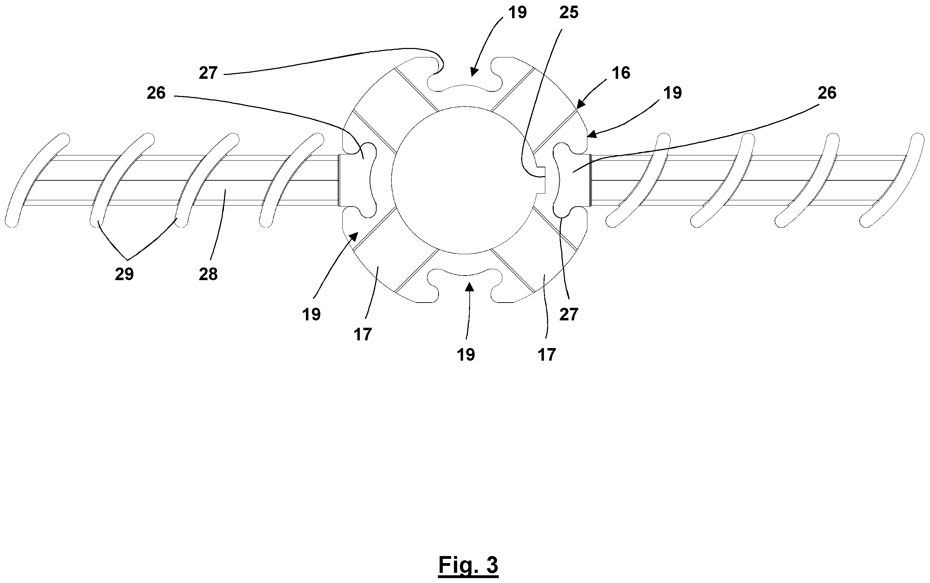

**Fig. 1** zeigt einen Teil einer sogenannten Temperiersäule 10 einer Temperiermaschine 1. Die Temperiermaschine 1 umschließt einen Masseraum 2 von zylindrischer Grundform. Der Masseraum 2 ist durch Trennscheiben 3 und 4 in übereinander angeordnete Massekammern 5 und 6 unterteilt. Die Trennscheiben 3 und 4 sind hier sämtlich als Temperierscheiben 7 mit innenliegenden geschlossenen Kanälen 8 und 9 für Temperierflüssigkeit ausgebildet. Die Temperierflüssigkeit 9 wird den Temperierscheiben 7 über hier nicht dargestellte Anschlüsse zugeführt und von diesen wieder abgeführt und zirkuliert in den Temperierscheiben 7, um diese auf einer definierten Temperatur zu halten und um dazu Wärmeenergie von Süßwarenmasse 11 in den angrenzenden Massekammern 5 und 6 aktiv abzuführen oder der Süßwarenmasse 11 in den angrenzenden Massekammern 5 und 6 Wärmeenergie aktiv zuzuführen. Einzelne der Trennscheiben 3, 4 können alternativ als reine Trennscheiben ohne Temperierfunktion ausgebildet sein. Die Süßwarenmasse 11 tritt durch eine Massedurchtrittsöffnung 12 in der unteren Trennscheibe 3 von unten in die untere Massenkammer 5 ein. Die Massedurchtrittsöffnung 12 ist ringförmig und wird nach innen durch eine Antriebswelle 13 begrenzt. An der Antriebswelle ist eine Passfeder 14 mit Schrauben 15 befestigt ist. In der Massenkammer 5 ist eine Antriebsnabe 16 angeordnet, die mittels der Passfeder 14 drehfest mit der Antriebswelle 13 verbunden ist. In der Antriebsnabe 16 sind - erst in den folgenden Figuren 2 und 3 sichtbare - Massedurchtrittskanäle 17 ausgebildet, die zu der Massedurchtrittsöffnung 12 hin offen sind und die radial zu einer Hauptachse 18 verlaufen. Die Hauptachse 18 ist die Achse, um die die Antriebswelle 13 mit einem hier nicht dargestellten Drehantrieb angetrieben wird. In Einhängeplätzen 19, die in Umfangsrichtung um die Hauptachse gegenüber den Massedurchtrittskanälen 17 versetzt angeordneten sind, sind Rührarme 20 in Richtung der Hauptachse 18 beweglich in die Antriebsnabe 16 eingehängt. Die Rührarme 20 sind wie die Antriebsnabe 16 zwischen den angrenzenden Trennscheiben 3 und 4 gefangen, dabei aber in ihren Einhängeplätzen gegenüber der Antriebsnabe 16, insbesondere in Richtung der Hauptachse 18, begrenzt beweglich. So können sich die Rührarme 20 gegenüber den angrenzenden Trennscheiben 3 und 4 ausrichten. Aus der unteren Massekammer 5 tritt die Süßwarenmasse 11 durch längs des Außenumfangs der Trennscheibe 4 angeordnete langlochförmige Massedurchtrittsöffnungen 21 in der Trennscheibe 4 in die obere Massekammer 6 über. In der oberen Massekammer 6 ist eine weitere Antriebsnabe 16 über die Passfeder 14 drehfest auf der Antriebswelle 13 angeordnet. In die Einhängeplätze 19 dieser Antriebsnabe 16 sind weitere Rührarme 20 in Richtung der Hauptachse 18 beweglich eingehängt. Dabei verlaufen auch hier nicht sichtbare Massedurchtrittskanäle 17 zwischen den Einhängeplätzen 19 hindurch zu einer Massedurchtrittsöffnung 12 in der oberen Trennscheibe 3 hin. Aus dieser Massedurchtrittsöffnung 12 tritt die Süßwarenmasse 11 nach oben aus. Hier können sich weitere Massekammern 5, 6 mit darin von der Antriebswelle 13 angetriebenen Rührarmen 20 anschließen. Nach radial außen sind die Massekammern 5, 6 durch einen Außenring 22 der unteren Trennscheibe 3 beziehungsweise einen Außenring 23 der mittleren Trennscheibe 4 und dazwischen angeordnete Dichtringe 24 begrenzt. Die durch den in Fig. 1 gezeigten Teil der Temperiermaschine 1 strömende Süßwarenmasse 11 überströmt die Oberseite der unteren Temperierscheibe 7 und die Unterseite der mittleren Temperierscheibe 7 in der unteren Massekammer 5 von der Hauptachse 18 weg. Hingegen überströmt die Süßwarenmasse 11 die Oberseite der mittleren Temperierscheibe 7 und die Unterseite der oberen Temperierscheibe 7 in der Massekammer 6 zu der Hauptachse 18 hin. In beiden Massekammern 5 und 6 wird die Süßwarenmasse 11 von den Rührarmen 20 gerührt.

**Fig. 2** zeigt die Antriebsnabe 16 in der oberen Massekammer 6 gemäß Fig. 1 mit den eingehängten Rührarmen 20 in einer Ansicht von oben. Die Antriebsnabe 16 weist jeweils vier um die Hauptachse 18 herum wechselweise aufeinanderfolgende Massedurchtrittskanäle 17 und Einhängeplätze 19 mit eingehängten Rührarmen 20 und eine Nut 25 für den Eingriff der Passfeder 14 gemäß Fig. 1 auf. T-förmige Einhängebereiche 26 der Rührarme 20 sind in eine komplementär ausgebildete T-förmige und parallel zu der Hauptachse 18 verlaufende Führungsnut 27 des jeweiligen Einhängeplatzes 19 eingehängt. Die T-förmigen Grundformen der Einhängebereiche 26 und der Führungsnuten 27 weißen abgerundete Konturen auf, und die Einhängebereiche 26 haben in den Führungsnuten 27 ein allseitiges Spiel von etwa einem zehntel Millimeter. Dieses Spiele ermöglicht eine Beweglichkeit jedes der Rührarme 20 gegenüber der Antriebsnabe 16 in Richtung der Hauptachse 18 und auch eine gewisse Winkelbeweglichkeit gegenüber der Hauptachse 18 von wenigen Grad. Die Rührarme 20 können einfach einzeln ausgetauscht oder entfernt werden, um in einer der Massekammern 5, 6 mit weniger als den hier dargestellten vier Rührarmen zu rühren. So sind von der in Fig. 3 gezeigten Antriebsnabe 16, die in Fig. 2 nach oben und unten weisenden Rührarme 20 durch Aushängen aus Ihren Einhängeplätzen 19 entfernt.

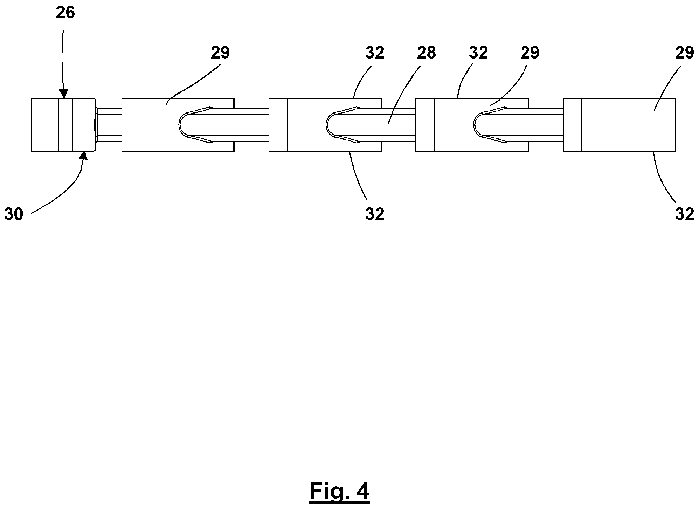

Wie in **Fig. 4** gezeigt ist, weisen die Rührarme 20 jeweils einen sich an den Einhängebereich 26 anschließenden und radial zu der Hauptachse ausgerichteten Hauptbalken 28 und davon in beiden axialen Richtungen abstehende Förderelemente 29 auf. Die Förderelemente 29 sind schaufelförmig ausgebildet, gegenüber ihrer Umlaufrichtung um die Hauptachse 18 angestellt und dadurch in der Lage, die Süßwarenmasse 11 je nach ihrer Umlaufrichtung um die Hauptachse 18 entweder radial nach außen oder radial nach innen zu fördern. Die Anstellrichtung der Förderelemente 29 der in Fig. 2 nach oben und unten weisenden Rührarme 20 ist der Anstellrichtung der Förderelemente 29 der in Fig. 2 nach links und rechts weisenden Rührarme 20 entgegen gesetzt. Während also das eine Paar der Rührarme 20 die Süßwarenmasse 11 in ihrer Hauptströmungsrichtung mit seinen Förderelementen 19 tatsächlich durch die obere Massekammer 16 fördert, bewirken die Förderelemente 29 des anderen Paars der Rührarme 20 ausschließlich eine bessere Durchmischung der Süßwarenmasse 11 in der oberen Massekammer 16. Diese unterschiedlichen Funktionen werden durch Einhängen derselben Rührarme 20 in unterschiedlichen Orientierungen in ihre Einhängeplätze 19 erreicht. An allen Förderelementen 29 sind Abstreifkanten 32 ausgebildet, um die Süßwarenmasse 11 von der angrenzenden Oberfläche der jeweils angrenzenden Temperierscheibe 7 abzustreifen, damit die Süßwarenmasse 11 dort nicht verweilt und insbesondere nicht aufbaut. Es sind aber auch andere Ausführungsformen der Rührarme 20 möglich.

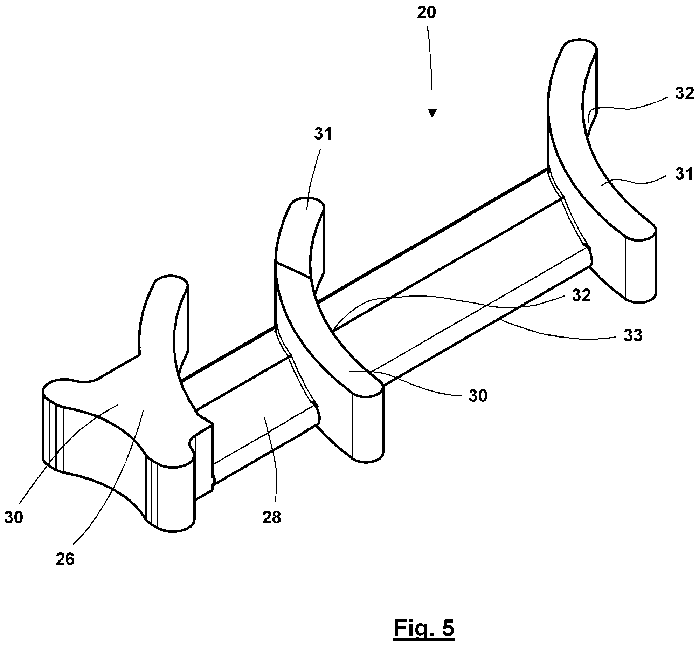

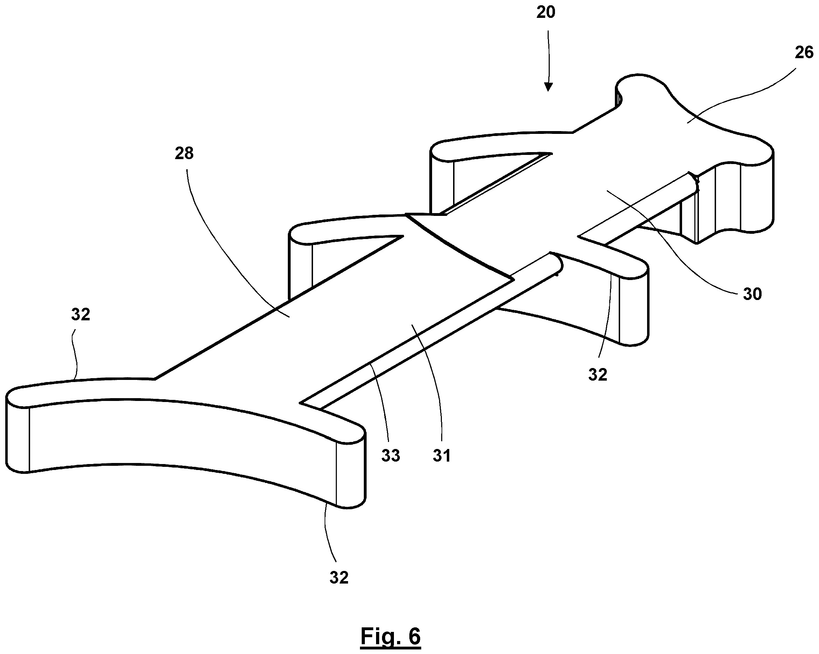

Die **Fig. 5** und **6** zeigen in zwei perspektivischen Ansichten einen Rührarm 20, der kürzer ausgebildet ist als die Rührarme 20 gemäß den Fig. 2 bis 4. Außerdem stehen die Förderelemente 29 nur in einer axialen Richtung von dem Hauptbalken 28 ab. Der Einhängebereich 26 ist Teil eines Führungsbereichs 30 des Rührarms 2, der zur Führung an den an die jeweilige Massekammer 5, 6 angrenzenden Trennscheiben 3, 4 vorgesehen ist und in dem der Rührarm 20 entsprechend seine größte Höhe in Richtung der Hauptachse 18 gemäß Fig. 1 aufweist. Radial nach außen schließt sich ein Hauptarbeitsbereich 31 des Rührarms 20 an, in dem er von den angrenzenden Trennscheiben 3, 4 weg um ein paar zehntel Millimeter freigestellt ist, in dem also die Höhe des Rührarms 20 in Richtung der Hauptachse 18 beidseitig reduziert ist. Der Hauptarbeitsbereich 31 bewegt sich gegenüber den angrenzenden Trennscheiben 3, 4 über größere Strecken, sodass es hier für eine Verlängerung der Lebensdauer der Temperiermaschine besonders wirksam ist, einen direkten Kontakt zwischen dem Rührarm 20 und den angrenzenden Trennscheiben zu verhindern. Zusätzlich zu den Abstreifkanten 32 an den Förderelementen 29 sind hier auch Abstreifkanten 33 an dem Hauptbalken 28 ausgebildet, um die Süßwarenmasse von der angrenzenden Oberfläche der jeweiligen Trennscheibe 3, 4 abzustreifen. Auch bei den Rührarmen 20 gemäß den Fig. 2 bis 4 kann ein Hauptarbeitsbereich 31 gegenüber einem Führungsbereich 30 in Richtung der Hauptachse 18 von den angrenzenden Oberflächen der Trennscheiben 3, 4 weg freigestellt sein. Dies gilt auch für die anhand der folgenden Figuren erläuterten weiteren Ausführungsformen der Rührarme 20 und deren Einhängung in ihre Antriebsnabe 16.

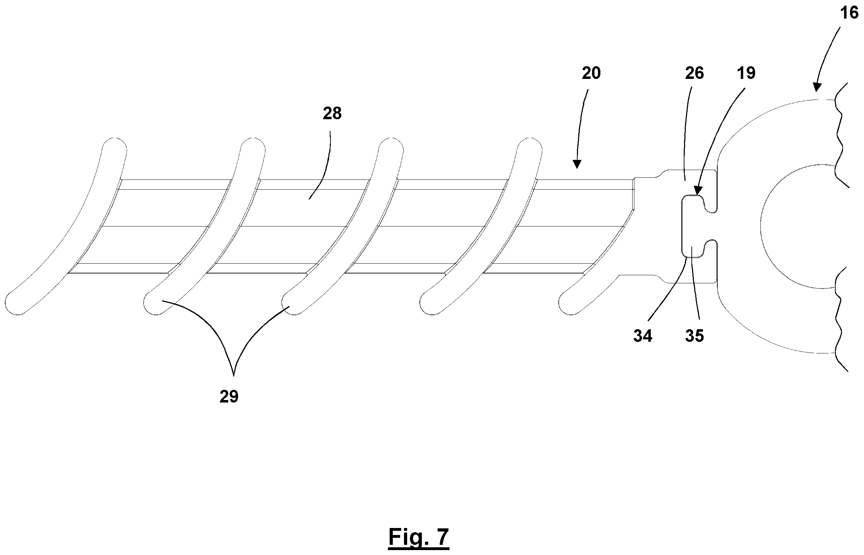

Bei der in **Fig. 7** dargestellten Ausführungsform des Rührarms 20 weist sein Einhängebereich 26 eine T-förmige Führungsnut 34 auf. Entsprechend weist der zugehörige Einhängeplatz 19 der Antriebsnabe 16 eine komplementäre T-förmige Führungsschiene 35 auf.

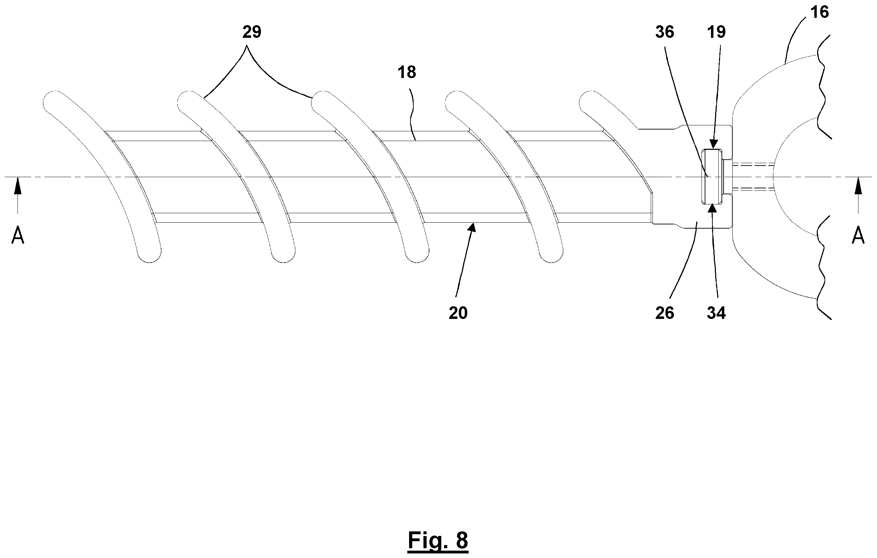

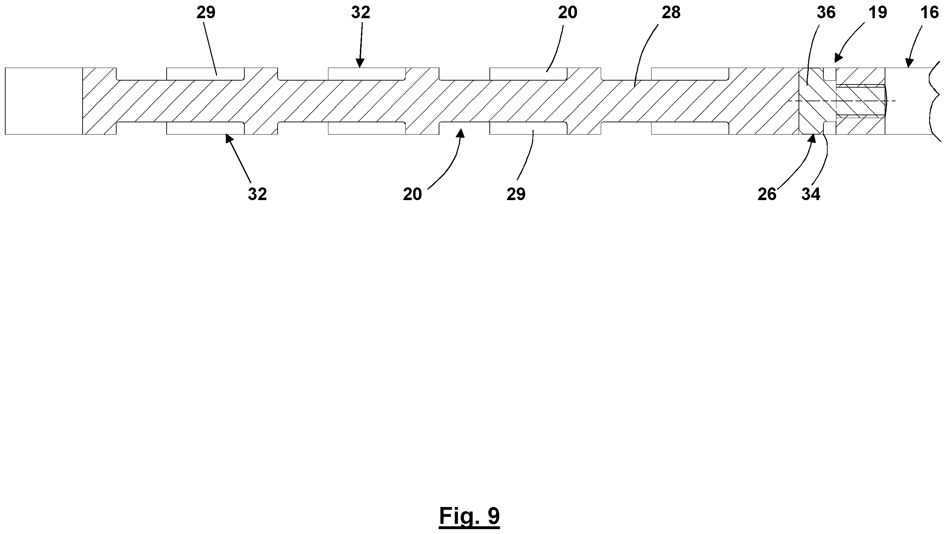

Die Ausführungsform des Rührarms 20 gemäß den **Fig. 8** und **9** entspricht grundsätzlich derjenigen gemäß Fig. 7. Statt einer Führungsschiene 35 ist in dem zugehörigen Einhängeplatz 19 jedoch ein Kopfbolzen 36 radial zu der Hauptachse 18 in die Antriebsnabe 16 eingeschraubt. Der Kopfbolzen 36 greift mit Spiel in die Führungsnut 34 ein. Der Kopfbolzen 36 in der Führungsnut 34 erlaubt dem Rührarm 20 gegenüber seiner Antriebsnabe 16 auch eine Verdrehung um seine radiale Haupterstreckungsrichtung. Dies muss nicht, kann aber von Nachteil sein, ebenso wie die Gefahr, dass sich der Kopfbolzen 36 - anders als ein einstückiger Einhängeplatz 19 - aus der Antriebsnabe 16 löst, und wie die kleineren Abstützflächen an dem Kopfbolzen 36 für die Abstützung von Drehmomenten zwischen dem Rührarm 20 und der Antriebsnabe 16 um die Hauptachse 18.

### BEZUGSZEICHENLISTE

- 1: Temperiermaschine
- 2: Masseraum
- 3: Trennscheibe
- 4: Trennscheibe
- 5: Massekammer
- 6: Massekammer
- 7: Temperierscheibe
- 8: Kanal
- 9: Kanal
- 10: Temperiersäule
- 11: Süßwarenmasse
- 12: Massedurchtrittsöffnung
- 13: Antriebswelle
- 14: Passfeder
- 15: Schraube
- 16: Antriebsnabe
- 17: Massedurchtrittskanal
- 18: Hauptachse
- 19: Einhängeplatz
- 20: Rührarm
- 21: Massedurchtrittsöffnung
- 22: Außenring
- 23: Außenring
- 24: Dichtring
- 25: Nut
- 26: Einhängebereich
- 27: Führungsnut
- 28: Hauptbalken
- 29: Förderelement
- 30: Führungsbereich
- 31: Hauptarbeitsbereich
- 32: Abstreifkante
- 33: Abstreifkante
- 34: Führungsnut
- 35: Führungsschiene
- 36: Kopfbolzen

## Patentansprüche

1. Temperiermaschine (1) zum Temperieren von Süßwarenmassen (11)
- mit einem Masseraum (2), der in Richtung einer Hauptachse (18) durch Trennscheiben (3, 4) in Massekammern (5, 6) unterteilt ist,
- wobei die sich quer zu der Hauptachse (18) und um die Hauptachse (18) herum erstreckenden Trennscheiben (3, 4) Massedurchtrittsöffnungen (12, 21) aufweisen und zumindest teilweise als Temperierscheiben (7) ausgebildet sind, mit denen Wärmeenergie aktiv der Süßwarenmasse (11) von extern zuführbar oder von der Süßwarenmasse (11) nach extern abführbar ist,
- mit einer sich längs der Hauptachse (18) durch die Trennscheiben (3, 4) und die Massekammern (5, 6) hindurch erstreckenden Antriebswelle (13),
- mit in den Massekammern (5, 6) drehfest auf der Antriebswelle (13) angeordneten Antriebsnaben (16) und
- mit drehfest an den Antriebsnaben (16) gelagerten, sich in den Massekammern (5, 6) radial zu der Hauptachse (18) erstreckenden Rührarmen (20),
**dadurch gekennzeichnet, dass** zumindest einige der Rührarme (20) einzeln in Richtung der Hauptachse (18) beweglich in ihre jeweilige Antriebsnabe (16) eingehängt sind.

2. Temperiermaschine (1) nach Anspruch 1, **dadurch gekennzeichnet,**
- **dass** die Antriebsnaben (16) in Richtung der Hauptachse (18) verlaufende hinterschnittene Führungsnuten (27) aufweisen, in denen Einhängebereiche (26) der eingehängten Rührarme (20) mit Spiel geführt sind, oder
- **dass** die Antriebsnaben (16) in Richtung der Hauptachse (18) verlaufende hinterschnittene Führungsschienen (35) aufweisen, auf denen Einhängebereiche (26) der eingehängten Rührarme (20) mit Spiel geführt sind.

3. Temperiermaschine (1) nach Anspruch 2, **dadurch gekennzeichnet, dass** das Spiel allseitig 0,05 mm bis 0,3 mm und vorzugsweise 0,1 mm bis 0,2 mm beträgt.

4. Temperiermaschine (1) nach Anspruch 2 oder 3, **dadurch gekennzeichnet, dass** die Führungsnuten (27) oder die Führungsschienen (35) T-förmige Grundformen mit abgerundeten Konturen aufweisen.

5. Temperiermaschine (1) nach einem der vorhergehenden Ansprüche, **dadurch gekennzeichnet, dass** die eingehängten Rührarme (20) nahe ihrer jeweiligen Antriebsnabe (16) liegende Führungsbereiche (30) und radial nach außen anschließende, von mindestens einer der angrenzenden Trennscheiben (3, 4) weg freigestellte Hauptarbeitsbereiche (31) aufweisen.

6. Temperiermaschine (1) nach Anspruch 5, **dadurch gekennzeichnet, dass** die Hauptarbeitsbereiche (31) gegenüber den Führungsbereichen (30) um 0,05 bis 1 mm freigestellt sind.

7. Temperiermaschine (1) nach Anspruch 5 oder 6, **dadurch gekennzeichnet, dass** die Führungsbereiche (30) Erstreckungen längs der Hauptachse (18) aufweisen, die um 0,1 bis 1 mm und vorzugsweise 0,2 bis 0,6 mm kleiner sind als ein Abstand der an die jeweilige Massekammer (5, 6) angrenzenden Trennscheiben (3, 4).

8. Temperiermaschine (1) nach einem der vorhergehenden Ansprüche, **dadurch gekennzeichnet, dass** zumindest einige der eingehängten Rührarme (20) einen radial zu der Hauptachse (18) verlaufenden Hauptbalken (28) mit in einer oder beiden axialen Richtungen anstehenden und Abstreifkanten (32) umfassenden Förderelementen (29) aufweisen.

9. Temperiermaschine (1) nach Anspruch 8, **dadurch gekennzeichnet, dass** die Förderelemente (29) gegenüber ihrer Umlaufrichtung um die Hauptachse (18) angestellt und vorzugsweise schaufelförmig ausgebildet sind.

10. Temperiermaschine (1) nach Anspruch 8 oder 9, **dadurch gekennzeichnet, dass** die Rührarme (20) in die Antriebsnaben (16) in in Richtung der Hauptachse (18) aufeinanderfolgenden Massekammern (5, 6) mit wechselnder Ausrichtung der Förderelemente eingehängt sind.

11. Temperiermaschine (1) nach einem der vorhergehenden Ansprüche, **dadurch gekennzeichnet, dass** die Trennscheiben (3, 4) in Richtung der Hauptachse (18) wechselweise eine ringförmige Massedurchtrittsöffnung (12) um die Antriebswelle (13) und längs ihres Außenumfangs verteilt angeordnete Massedurchtrittsöffnungen (21) aufweisen.

12. Temperiermaschine (1) nach Anspruch 11, **dadurch gekennzeichnet, dass** jede Antriebsnabe (16) in Umfangsrichtung um die Antriebswelle (13) herum aufeinanderfolgende Einhängeplätze (19) und dazwischenliegende radial verlaufende und zu benachbarten ringförmigen Massedurchtrittsöffnungen (12) hin offene Massedurchtrittskanäle (17) aufweisen.

13. Temperiermaschine (1) nach einem der vorhergehenden Ansprüche, **dadurch gekennzeichnet, dass** in den Temperierscheiben (7) geschlossene Kanäle (8, 9) für Temperierflüssigkeit verlaufen.

14. Temperiermaschine (1) nach einem der vorhergehenden Ansprüche, **dadurch gekennzeichnet, dass** die Antriebsnaben (16) jeweils zwei bis acht Einhängeplätze (19) für Rührarme (20) aufweisen.

15. Temperiermaschine (1) nach Anspruch 14, **dadurch gekennzeichnet, dass** zumindest in einer Antriebsnabe (16) mindestens ein Einhängeplatz (19), vorzugsweise die Hälfte der Einhängeplätze (19) nicht mit Rührarmen (20) besetzt ist.

## Claims

1. Tempering machine (1) for tempering confectionery masses (11)
- having a mass space (2) which, in direction of a main axis (18), is subdivided into mass chambers (5, 6) by dividing discs (3, 4),
- wherein the dividing discs (3, 4) extend crosswise to the main axis (18) and around the main axis (18), and comprise mass passage openings (12, 21), at least some of the dividing discs (3, 4) being configured as tempering discs (7) by which heat energy can actively be conveyed from an external source to the confectionery mass (11), or be conveyed away from the confectionery mass (11) to an external sink,
- having a drive shaft (13) extending along the main axis (18) through the dividing discs (3, 4) and the mass chambers (5, 6),
- having drive hubs (16) arranged, in the mass chambers (5, 6), on the drive shaft (13) in a rotationally fixed way, and
- stirring arms (20) mounted to the drive hubs (16) in a rotationally fixed way and extending radially to the main axis (18) in the mass chambers (5, 6),
**characterised in that** at least some of the stirring arms (20) are individually hooked in their respective drive hub (16) in such a way that they are movable in direction of the main axis (18).

2. Tempering machine (1) of claim 1, **characterised in**
- **that** the drive hubs (16) comprise undercut guiding grooves (27) running in the direction of the main axis (18), in which hook-in regions (26) of the hooked-in stirring arms (20) are guided with play, or
- **that** the drive hubs (16) comprise undercut guiding rails (35) running in direction of the main axis (18), on which hook-in regions (26) of the hooked-in stirring arms (20) are guided with play.

3. Tempering machine (1) of claim 2, **characterised in that** the play is 0.05 mm to 0.3 mm and preferably 0.1 mm to 0.2 mm in all directions.

4. Tempering machine (1) of claim 2 or 3, **characterised in that** the guiding grooves (27) or the guiding rails (35) comprise T-shaped basic shapes with rounded contours.

5. Tempering machine (1) of any of the preceding claims, **characterised in that** the hooked-in stirring arms (20) comprise guiding regions (30) located close to their respective drive hub (16) and main working regions (31) following in outward direction and freed from at least one of the adjacent dividing discs (3, 4).

6. Tempering machine (1) of claim 5, **characterised in that** the main working region (31) is freed by 0.05 to 1 mm with regard to the guiding regions (30).

7. Tempering machine (1) of claim 5 or 6, **characterised in that** the guiding regions (30) have extensions along the main axis (18) which are by 0.1 to 1 mm and preferably by 0.2 to 0.6 mm smaller than a distance of the dividing discs (3, 4) being adjacent to the respective mass chamber (5, 6).

8. Tempering machine (1) of any of the preceding claims, **characterised in that** at least some of the hooked-in stirring arms (20) comprise a main beam (28) running radially to the main axis (18) with conveying elements (29) protruding in one or both axial directions and including striking-off edges (32).

9. Tempering machine (1) of claim 8, **characterised in that** the conveying elements (29) are inclined with regard to their rotation direction around the main axis (18) and, preferably, shovel-shaped.

10. Tempering machine (1) of claim 8 or 9, **characterised in that** the stirring arms (20) are hooked in the drive hubs (16) with alternating orientations of their conveying elements in mass chambers (5, 6) following to one another in the direction of the main axis (18).

11. Tempering machine (1) of any of the preceding claims, **characterised in that** the dividing discs (3, 4), in the direction of the main axis (18), alternatingly comprise a ring-shaped mass passage opening (12) around the drive shaft (13) and mass passage openings (21) distributed along their outer circumference.

12. Tempering machine (1) of claim 11, **characterised in that** each drive hub (16) comprises hook-in places (19) following to one another in circumferential direction around the drive shaft (13) and interjacent radially extending mass passage channels (17) which are open towards neighbouring ring-shaped mass passage openings (12).

13. Tempering machine (1) of any of the preceding claims, **characterised in that** closed channels (8, 9) for tempering liquids run within the tempering discs (7).

14. Tempering machine (1) of any of the preceding claims, **characterised in that** each of the drive hubs (16) comprises two to eight hook-in places (19) for stirring arms (20).

15. Tempering machine (1) of claim 14, **characterised in that**, in at least one drive hub (16), at least one hook-in place (19), preferably half the hook-in places (19), is not occupied by stirring arms (20).

## Revendications

1. Tempéreuse (1) pour tempérer des masses de confiserie (11)
- avec un espace de masse (2) qui est sous-divisé en chambres de masse (5, 6) par des disques de coupe (3, 4) en direction d'un axe principal (18),
- dans laquelle les disques de coupe (3, 4), qui s'étendent transversalement par rapport à l'axe principal (18) et autour de l'axe principal (18), présentent des ouvertures de passage de masse (12, 21) et sont au moins partiellement conçus comme des disques à tempérer (7), avec lesquels l'énergie thermique est activement transférée à la masse de confiserie (11), peut être apportée de l'extérieur ou peut être retirée de l'extérieur de la masse de confiserie (11),
- avec un arbre d'entraînement (13) s'étendant le long de l'axe principal (18) à travers les disques de coupe (3, 4) et les chambres de masse (5, 6),
- avec des arbres d'entraînement (16) agencés solidairement avec les chambres de masse (5, 6) sur l'arbre d'entraînement (13) et
- avec des bras malaxeurs (20) montés solidairement sur les arbres d'entraînement (16) et s'étendant dans les chambres de masse (5, 6) radialement par rapport à l'axe principal (18), **caractérisée en ce qu'**au moins certains des bras malaxeurs (20) sont individuellement suspendus de manière mobile en direction de l'axe principal (18) dans leur arbre d'entraînement respectif (16).

2. Tempéreuse (1) selon la revendication 1, **caractérisée en ce que**
- les arbres d'entraînement (16) présentent des rainures de guidage (27) en contre-dépouille s'étendant en direction de l'axe principal (18), dans lesquelles les zones de suspension (26) des bras malaxeurs (20) suspendus sont guidées avec un certain jeu, ou **en ce que**
- les arbres d'entraînement (16) présentent des rails de guidage (35) à contre-dépouille s'étendant en direction de l'axe principal (18), sur lesquels sont guidées avec un certain jeu des zones de suspension (26) des bras malaxeurs (20) suspendus.

3. Tempéreuse (1) selon la revendication 2, **caractérisée en ce que** le jeu sur tous les côtés est de 0,05 mm à 0,3 mm et de préférence de 0,1 mm à 0,2 mm.

4. Tempéreuse (1) selon la revendication 2 ou 3, **caractérisée en ce que** les rainures de guidage (27) ou les rails de guidage (35) présentent des formes de base en forme de T avec des contours arrondis.

5. Tempéreuse (1) selon l'une des revendications précédentes, **caractérisée en ce que** les bras malaxeurs suspendus (20) présentent des zones de guidage (30) situées à proximité de leur arbre d'entraînement respectif (16) et des zones de travail principales (31) adjacentes radialement vers l'extérieur et exposées à l'opposé d'au moins un des disques de coupe adjacents (3, 4).

6. Tempéreuse (1) selon la revendication 5, **caractérisée en ce que** les zones de travail principales (31) sont libérées des zones de guidage (30) de 0,05 à 1 mm.

7. Tempéreuse (1) selon la revendication 5 ou 6, **caractérisée en ce que** les zones de guidage (30) présentent des extensions le long de l'axe principal (18) qui sont de 0,1 à 1 mm et de préférence de 0,2 à 0,6 mm inférieures à une distance entre les disques de coupe (3, 4) adjacents à la chambre de masse respective (5, 6).

8. Tempéreuse (1) selon l'une des revendications précédentes, **caractérisée en ce qu'**au moins certains des bras malaxeurs (20) suspendus présentent un bandeau principal (28) qui s'étend radialement par rapport à l'axe principal (18) et comporte des éléments de transport (29) qui s'étendent dans une ou dans les deux directions axiales et comprennent des bords racleurs (32).

9. Tempéreuse (1) selon la revendication 8, **caractérisée en ce que** les éléments de transport (29) sont positionnés par rapport à leur sens de rotation autour de l'axe principal (18) et sont de préférence réalisés en forme de pale.

10. Tempéreuse (1) selon la revendication 8 ou 9, **caractérisée en ce que** les bras malaxeurs (20) sont suspendus dans les arbres d'entraînement (16) dans les chambres de masse (5, 6) successives en direction de l'axe principal (18) avec orientation alternée des éléments de transport.

11. Tempéreuse (1) selon l'une des revendications précédentes, **caractérisée en ce que** les disques de coupe (3, 4) présentent en alternance en direction de l'axe principal (18) une ouverture de passage de masse (12) autour de l'arbre d'entraînement (13) et des ouvertures de passage de masse (21) réparties le long de sa circonférence extérieure.

12. Tempéreuse (1) selon la revendication 11, **caractérisée en ce que** chaque arbre d'entraînement (16) comporte des emplacements de suspension successifs (19) dans la direction circonférentielle autour de l'arbre d'entraînement (13) et des canaux de passage de masse intermédiaires s'étendant radialement (17) qui s'ouvrent vers des ouvertures de passage de masse adjacentes (12).

13. Tempéreuse (1) selon l'une des revendications précédentes, **caractérisée en ce que** des canaux fermés (8, 9) pour le liquide de régulation de température aboutissent dans les disques de régulation de température (7).

14. Tempéreuse (1) selon l'une des revendications précédentes, **caractérisée en ce que** les arbres d'entraînement (16) comportent chacun deux à huit emplacements de montage (19) pour des bras malaxeurs (20).

15. Tempéreuse (1) selon la revendication 14, **caractérisée en ce qu'**au moins dans un arbre d'entraînement (16), au moins un emplacement suspendu (19), et de préférence la moitié des emplacements suspendus (19), n'est pas occupé par des bras malaxeurs (20).
